# EUROPÄISCHE PATENTSCHRIFT

(11) **EP 1 168 882 B1**
(45) Veröffentlichungstag und Bekanntmachung des Hinweises auf die Patenterteilung: **02.11.2005**
(21) Anmeldenummer: 01104385.8
(22) Anmeldetag: 23.02.2001
(51) Int. Cl.: H04Q 11/04, H04Q 3/62

(54) **Verfahren zur Zugangsprüfung bei Einwahl über eine PSS1/QSIG-Leitung in eine Telekommunikationsanlage**
Method of access authentication for dial-in into a telecommunication device via a PSS1/QSIG link
Méthode d'authentification d'accès pour appels vers un dispositif de télécommunication par liaison PSS1/QSIG

(30) Priorität: 28.06.2000 DE 10031556
(43) Veröffentlichungstag der Anmeldung: 02.01.2002
(73) Patentinhaber: Tenovis GmbH & Co. KG, 60362 Frankfurt am Main (DE)
(72) Erfinder: Kayser, Udo, 42285 Wuppertal (DE)
(74) Vertreter: Bohnenberger, Johannes

(56) Entgegenhaltungen:
- EP-A- 0 967 830
- DE-A- 19 612 663
- US-A- 5 566 182
- US-A- 5 675 638

## Beschreibung

### Stand der Technik

Die Erfindung geht aus von einem Verfahren zur Zugangsprüfung bei Einwahl über eine PSS1/QSIG-Leitung in eine Telekommunikationsanlage nach der Gattung des unabhängigen Patentanspruchs.

Es ist bereits bekannt, das PSS1/QSIG-Protokoll für private Telekommunikationsnetze einzusetzen. Das PSS1/QSIG-Protokoll erlaubt insbesondere die Kopplung von Telekommunikationsanlagen verschiedener Hersteller. Die Verbindungen zwischen den einzelnen Netzknoten des privaten Telekommunikationsnetzes werden durch Standleitungen, und/oder Wählleitungen und/oder IP(Internet-Protokoll)-Strecken (über sogenannte IP-Gateways) realisiert, wobei hier beliebige Konfigurationen in einem Netz auftreten können. Solche privaten Telekommunikationsnetze sind über sogenannte Gateways mit dem öffentlichen Telekommunikationsnetz verbindbar. Aufbau und Abbau von PSS1/QSIG-Verbindungen zwischen den einzelnen Knoten des privaten Telekommunikationsnetzes werden mittels Meldungen aus dem Basic Call vorgenommen.

Die US-A-5 675 638 beschreibt ein Verfahren zur Identifizierung eines Benutzers über ein von ihm benutztes Telekommunikationsendgerät, welches sich außerhalb eines privaten Telekommunikationsnetzes befindet, über eine Telekommunikationsanlage des privaten Netzes. Hierzu wählt der Benutzer eine vorgegebene spezielle Nummer, die zum Aufbau einer Verbindung mit einer zur Durchführung des Verfahrens bestimmten Einrichtung des privaten Netzes führt. Diese Einrichtung sendet eine Identifizierungsaufforderung an das Telekommunikationsendgerät.

In Reaktion auf diese Aufforderung gibt der Benutzer benutzerbezogene Identifizierungsinformationen über das Endgerät ein. Diese Informationen werden an die spezielle Einrichtung übermittelt. Sofern die Informationen korrekt sind, veranlasst die spezielle Einrichtung weitere Verfahrensschritte. Es werden keine Identifizierungsinformationen, die ein Telekommunikationsendgerät oder eine Telekommunikationsanlage betreffen, angefordert oder übermittelt; die dem Endgerät zugeordnete Rufnummer ist nicht zur Identifizierung geeignet. Im Zusammenhang mit der Benutzer-Identifizierung findet ein Verbindungsaufbau zwischen zwei Telekommunikationsendgeräten, d.h. zwischen dem vom Benutzer benutzten Endgerät und einem Telekommunikationsendgerät im privaten Netz, nicht statt.

Die EP-A 0 967 830 beschreibt ein Verfahren zur Übermittlung von ISDN-Signalisierungsdaten zwischen zwei Telekommunikationsanlagen über eine IP-Verbindung oder über eine QSIG-Verbindung. Über letztere werden die zu übermittelnden ISDN-Nachrichten unter Verwendung der QSIG-FACILITY-Nachricht übertragen. Eine Identifizierung einer Telekommunikationsanlage gegenüber einer anderen Telekommunikationsanlage wird nicht beschrieben.

### Vorteile der Erfindung

Das erfindungsgemäße Verfahren zur Einwahl über eine PSS1/QSiG-Leitung in eine Telekommunikationsanlage mit den Merkmalen des unabhängigen Patentanspruchs hat demgegenüber den Vorteil, dass während eines Verbindungsaufbaus eine automatische Zugangsprüfung erfolgt, um einen unberechtigten Zugriff zu dem privaten Telekommunikationsnetz zu erkennen. Dies erfolgt mittels einer Aufforderung zur Identifizierung von einer am Verbindungsaufbau beteiligten Telekommunikationsanlage (im folgenden: prüfende Telekommunikationsanlage) des privaten Telekommunikationsnetzes in Richtung zur Telekommunikationsanlage des Teilnehmers, der die Verbindung aufbauen möchte (der rufende Teilnehmer kann auch ein Teilnehmer des öffentlichen Telekommunikationsnetzes sein, in diesem Fall wird die Identifizierungsanforderung von einem Gateway bearbeitet), so dass ein Mißbrauch von Ressourcen des privaten Telekommunikationsnetzes verhindert wird. Solche Netzressourcen sind alle Einrichtungen des privaten Telekommunikationsnetzes, insbesondere die Zugänge in das öffentliche Telekommunikationsnetz (Stichwort Gebührenbetrug) oder auch alle Rechner, die über das Netz erreichbar sind.

Das Verfahren hat weiterhin den Vorteil, dass individuelle Identifizierungsverfahren möglich sind. Dies führt zu einer großen Flexibilität in der Spezifikation eines Identifizierungsverfahrens, so dass nach Bedarf ein angemessenes Maß an Sicherheit erreicht wird. Das erfindungsgemäße Verfahren hat weiterhin den Vorteil, dass damit die Bildung von Netzdomänen möglich ist. Netzdomänen sind Bereiche eines Telekommunikationsnetzes, die durch eine Zugangsprüfung von einem sonst frei zugänglichen Netz ausgeschlossen werden können. Für Unternehmen, die private Telekommunikationsnetze betreiben, bietet dies die Möglichkeit, sicherheitssensitive Bereiche besonders zu schützen. Dabei hat das erfindungsgemäße Verfahren den weiteren Vorteil, dass eine wiederholte Zugangsprüfung auch mit unterschiedlichen Identifizierungsverfahren möglich ist. Beispielsweise bei einer ersten Telekommunikationsanlage des privaten Telekommunikationsnetzes und dann später bei weiteren Telekommunikationsanlagen, die den Zutritt zu Netzdomänen ermöglichen.

Durch die in den abhängigen Ansprüchen aufgeführten Maßnahmen und Weiterbildungen sind vorteilhafte Verbesserungen des im unabhängigen Patentanspruch angegebenen Verfahrens zur Zugangsprüfung bei Einwahl über eine PSS1/QSIG-Leitung in eine Telekommunikationsanlage möglich.

Besonders vorteilhaft ist, dass die Zugangsprüfung durch eine Transitanlage oder die Zielanlage selbst vorgenommen werden kann. Eine Zielanlage kann dabei auch ein Gateway sein. Damit ist es möglich, auch eine kaskadenhafte Zugangsprüfung mit unterschiedlichen Sicherheitsniveaus zu realisieren. Damit wird der Zutritt zu besonders sicherheitsrelevanten Bereichen eines Telekommunikationsnetzes sukzessive erschwert.

Darüber hinaus ist es von Vorteil, dass bei einer richtigen Identifizierung der rufenden Telekommunikationsanlage die Verbindung von der prüfenden Telekommunikationsanlage fortgesetzt wird, da es sich dann um einen berechtigten Zutritt zum Telekommunikationsnetz handelt.

Weiterhin ist es von Vorteil, dass bei einer falschen oder ausbleibenden Identifizierung ein unerlaubter Zugangsversuch zum Telekommunikationsnetz erkannt wird und Schutzmaßnahmen eingeleitet werden. Zu diesen Schutzmaßnahmen gehört vorteilhafterweise, die Verbindung auszulösen, die Verbindung an ein vorgegebenes Telekommunikationsendgerät weiterzuleiten, um dort mittels Sicherheitspersonal oder mit besonderer Software den Eindringling zu identifizieren, oder es wird ein Protokoll ausgegeben, oder die Verbindung wird fortgesetzt und Verbindungsdaten werden gespeichert und ausgegeben. Diese Möglichkeiten stehen einem Betreiber eines privaten Telekommunikationsnetzes, der das PSS1/QSIG-Signalisierungsverfahren verwendet, zur Verfügung, sofern das erfindungsgemäße Verfahren implementiert ist. Je nach Sicherheitsbedürfnissen kann der Betreiber dann eine oder mehrere von diesen Möglichkeiten implementieren.

Der Verbindungsaufbau wird von der rufenden Telekommunikationsanlage mit der Meldung SETUP durchgeführt, während vorteilhafterweise die Aufforderung zur Identifizierung mittels einer der Meldungen PROGRESS oder FACILITY von der prüfenden Telekommunikationsanlage zu der Ursprungsanlage gesendet wird. Die richtige Identifikation wird dann mittels der Meldung FACILITY zu der prüfenden Telekommunikationsanlage übertragen. Damit wird eine automatische und vereinfachte Verarbeitung der Identifizierung durch die beteiligten Telekommunikationsanlagen ermöglicht, sofern das erfindungsgemäße Verfahren auf beiden Telekommunikationsanlagen implementiert ist.

Weiterhin ist es von Vorteil, dass das erfindungsgemäße Verfahren sowohl bei Verbindungen mit als auch ohne Nutzkanalbelegung durchgeführt werden kann, also auch nur bei reinen Signalisierungsverbindungen (PSS1/QSIG-Begriff: call-independent-connection-oriented, hier D-Kanal-Verbindung). Reine D-Kanalverbindungen dienen u.a. zur remote Steuerung von Einrichtungen des privaten Telekommunikationsnetzes als auch zur remote Steuerung daran angeschlossener Geräte. Es handelt sich also hierbei um eine Fernsteuerung von Einrichtungen und Geräten. Dies erweitert den Anwendungsbereich des erfindungsgemäßen Verfahrens.

Darüber hinaus ist es von Vorteil, dass das erfindungsgemäße Verfahren auch unbemerkt durch den rufenden Teilnehmer ablaufen kann.

Es ist auch von Vorteil, dass das erfindungsgemäße Verfahren ohne den Einsatz von speziellem Personal auskommt. D.h. Anrufe müssen z.B. nicht über eine vermittlungstechnische Zentrale geleitet werden, die den Zugang steuert.

Desweiteren ist es von Vorteil, dass für das erfindungsgemäße Verfahren verschiedene Konfigurationen der Telekommunikationsendgeräte, die einerseits rufen und andererseits gerufen werden, möglich sind. Dabei ist es möglich, dass beide unmittelbar an eine Telekommunikationsanlage des privaten Telekommunikationsnetzes angeschlossen sind. Oder beide sind über das öffentliche Telekommunikationsnetz an die Telekommunikationsanlage des privaten Telekommunikationsnetzes angeschlossen. Oder ein Telekommunikationsendgerät ist direkt an die Telekommunikationsanlage des privaten Telekommunikationsnetzes angeschlossen, während das andere Telekommunikationsnetz über das öffentliche Telekommunikationsnetz an eine Telekommunikationsanlage des privaten Telekommunikationsnetzes angeschlossen ist. Die Übergänge zwischen dem PSS1/QSIG-Telekommunikationsnetz und dem öffentlichen Telekommunikationsnetz werden durch Gateways bedient.

Darüber hinaus ist es von Vorteil, dass mehrere Telekommunikationsanlagen, über die die Verbindung zwischen dem rufenden und dem gerufenen Telekommunikationsendgerät hergestellt wird, eine Identifizierung durchführen können. Dadurch ist die Kaskadenidentifizierung möglich, wobei diese Identifizierung für verschieden sicherheitsrelevante Bereiche eines privaten Telekommunikationsnetzes vorgenommen wird, wobei die prüfende Telekommunikationsanlage die während des Prüfvorgangs eintreffenden Wahlinformationen zur späteren Weiterverarbeitung zwischenspeichert.

Darüber hinaus ist es von Vorteil, dass das erfindungsgemäße Verfahren sowohl für Einzelwahl als auch für Blockwahl funktioniert. Bei Einzelwahl werden während des Prüfvorgangs eintreffende Wahlinformationen gespeichert, und es wird dabei erst nach erfolgreicher Identifizierung weiter vermittelt.

Darüber hinaus ist es von Vorteil, dass durch die Verwendung der Meldung PROGRESS es gestattet wird, Töne oder Ansagen während der Zugangsprüfung zu schalten.

Es ist weiterhin von Vorteil, dass das Verfahren durch Verwendung der Interpretations-APDU RejectAnyUnrecognizedAPDU erzwingt, dass die rufende Telekommunikationsanlage, die das erfindungsgemäße Verfahren nicht unterstützt, eine Reject APDU zur prüfenden Telekommunikationsanlage schickt, was diese dann als Fehlschlag der Zugangsprüfung wertet. Damit werden auch diese Telekommunikationsanlagen in das erfindungsgemäße Verfahren einbezogen, die dieses erfindungsgemäße Verfahren selbst nicht unterstützen.

Darüber hinaus ist es von Vorteil, dass die Schlüsseldaten zur Prüfung der Identifizierung beliebig gewählt werden können. Dies erhöht die Flexibilität des erfindungsgemäßen Verfahrens. Es können dabei auch gleichzeitig verschiedene Schlüsseldaten und -verfahren von den Anlagen und dem Netz verwendet werden.

Weiterhin ist es von Vorteil, dass an einer prüfenden Telekommunikationsanlage mittels der vorgegebenen Fehlercodes, die von der rufenden Telekommunikationsanlage gesendet wurden, erkennbar ist, warum die rufende Telekommunikationsanlage, obwohl sie das erfindungsgemäße Verfahren grundsätzlich unterstützt, keine Identifizierungsdaten sendet. Das kann beispielsweise daran liegen, dass das Merkmal nicht freigeschaltet wurde oder dass die rufende Anlage das spezielle Schlüsselverfahren nicht unterstützt.

Darüber hinaus ist es von Vorteil, dass eine rufende bzw. eine prüfende Telekommunikationsanlage zur Durchführung des erfindungsgemäßen Verfahrens vorliegt.

### Zeichnung

Ausführungsbeispiele der Erfindung sind in der Zeichnung dargestellt und werden in der nachfolgenden Beschreibung näher erläutert. Es zeigt Figur 1 einen Netzaufbau, Figur 2 das erfindungsgemäße Verfahren als Flußdiagramm, Figur 3 das PSS1/QSIG-Protokollmodell, Figur 4 den Meldungsablauf bei Blockwahl zum Aufbau einer Verbindung mit Nutzkanalbelegung (Nutzkanäle sind unter anderem B-Kanäle), Figur 5 den Meldungsablauf bei Einzelwahl und Figur 6 den Meldungsablauf bei Blockwahl bei D-Kanal-Verbindung.

### Beschreibung

Zugangsprüfungen zu privaten Telekommunikationsnetzen oder zumindest zu Bereichen eines Telekommunikationsnetzes, also von Netzdomänen, werden immer wichtiger, da die Kriminalität im Bereich des Ausspähens von Daten über Telekommunikationsnetze immer mehr zunimmt. Auch die Zerstörung von Daten durch Plazierung von Computerviren auf fremden Rechnern nimmt immer mehr zu, wobei auch die gezielte Blockade eines Netzwerks auftreten kann. Ebenfalls wichtig ist der Schutz vor mißbräuchlicher Nutzung, z.B. Gebührenbetrug (Vorgang: Zugang in ein privates Telekommunikationsnetz über ein öffentliches Ortsnetz (geringe Gebühren), danach Nutzung der Amtszugänge des Privatnetzes zum Führen von z.B. Ferngesprächen. Der Eindringling zahlt den Ortstarif, der Betreiber des Privatnetzes das Ferngespräch). Daher sind verschiedene Formen der Sicherheitsüberprüfung bei einem Zugriff auf eine Telekommunikationsanlage in einem privaten Telekommunikationsnetz notwendig. Dies ist insbesondere auch deshalb zu beachten, weil die Leitungen zwischen den einzelnen Telekommunikationsanlagen zunehmend nicht nur Standleitungen sind (ggf. sogar unter unmittelbarer Kontrolle des Betreibers des Telekommunikationsnetzes selbst), sondern auch Wählleitungen sind, oder es werden auch Strecken über das Internet geführt, was die Angriffsmöglichkeiten auf ein Netz von außen drastisch erhöht.

Erfindungsgemäß wird ein Verfahren zur Zugangsprüfung bei Einwahl über eine PSS1/QSIG-Leitung in eine Telekommunikationsanlage verwendet. Das erfindungsgemäße Verfahren fordert die rufende Telekommunikationsanlage auf, eine Identifizierung an die prüfende Telekommunikationsanlage zu senden. Die prüfende Telekommunikationsanlage kann entweder eine oder mehrere Transitanlagen oder die Zielanlage selbst sein. Dabei ist es auch möglich, dass eine Identifizierung von mehreren Telekommunikationsanlagen, die sich auf dem Weg zwischen dem rufenden Telekommunikationsendgerät und dem gerufenen Telekommunikationsendgerät befinden, durchgeführt wird. Je nachdem, ob die Identifizierung richtig oder falsch ist oder ausbleibt, reagiert die prüfende Telekommunikationsanlage. Bei einer richtigen Identifizierung wird die Verbindung fortgesetzt, während bei einer falschen oder ausbleibenden Identifizierung die prüfende Telekommunikationsanlage die Verbindung auslöst oder zu einem vorgegebenen Telekommunikationsendgerät weiterleitet oder ein Protokoll ausgibt oder die Verbindung fortsetzt, wobei die Verbindungsdaten gespeichert und ausgegeben werden. Je nach Wunsch des Betreibers des privaten Telekommunikationsnetzes können eine oder mehrere dieser Möglichkeiten auf den Telekommunikationsanlagen des privaten Telekommunikationsnetzes implementiert sein. Das erfindungsgemäße Verfahren ist sowohl bei Verbindungen mit als auch ohne Nutzkanalbelegung durchführbar. Das Verfahren ist weiterhin bei Block- oder Einzelwahl einsetzbar. Die Schlüsseldaten, mit denen die Identifizierung angefragt bzw. gegeben wird, sind nach dem erfindungsgemäßen Verfahren beliebig wählbar.

Eine Telekommunikationsanlage stellt eine Vorrichtung dar, die Telekommunikationsendgeräte oder ein Kommunikationsnetz an ein weiteres Kommunikationsnetz, üblicherweise ISDN, anschließt. Weiterhin weist eine Telekommunikationsanlage Mittel zur Verarbeitung von Meldungen, die über das Kommunikationsnetz übertragen werden, auf. Solche Mittel sind insbesondere Prozessoren und Speicher. Im folgenden beschreibt der Begriff Gateway die Telekommunikationsanlage, in welcher der Übergang zwischen dem öffentlichen Telekommunikationsnetz (DSS1) und dem privaten Telekommunikationsnetz (QSIG/PSS1) stattfindet. Im folgenden beschreibt der Begriff Ursprungsanlage die Telekommunikationsanlage, welche den Aufbau einer Verbindung innerhalb des privaten Telekommunikationsnetzes initiiert hat. Im folgenden beschreibt der Begriff Zielanlage die Telekommunikationsanlage, an welcher das Telekommunikationsendgerät unmittelbar beziehungsweise über eine DSS1-Amtsleitung angeschaltet ist, zu dem hin eine Verbindung aufgebaut wurde beziehungsweise wird.

ISDN (Integrated Services Digital Network) ist eine digitale Vermittlungstechnik, die alle vermittlungstechnischen Dienste (zum Beispiel Sprache, Daten, Video und Fax) in ein digitales Leitungsnetz integriert. ISDN stellt eine Schnittstelle dar, um digitale Dienste unabhängig von Leitungsart oder der Nutzung der Leitungen zu verwenden.

QSIG (Signalisierung am Q-Referenzpunkt) beziehungsweise PSS1 (Private Integrated Signalling System Number 1) ist ein Signalisierungsverfahren, das international und für den europäischen Raum standardisiert ist. QSIG und PSS1 sind Synonyme. Die Standardisierung erfolgt auf internationaler Ebene durch ISO/IEC und im europäischen Raum durch die ETSI und ECMA, wobei eine gegenseitige Harmonisierung der Standards angestrebt wird. QSIG ist offen für Hersteller von Telekommunikationsanlagen. Es ermöglicht daher insbesondere die Signalisierung und damit Kommunikation zwischen Telekommunikationsanlagen von verschiedenen Herstellern, sofern diese Telekommunikationsanlagen nach QSIG signalisieren. QSIG beziehungsweise PSS1 definieren ein ISDN (Integrated Services Digital Network) für die Teilnehmer eines privaten Kommunikationsnetzes. Folgende Standards beschreiben die grundlegende Kommunikation bei QSIG, den sogenannten basic call: ETS 300 172 Edition 3, ISO/IEC 11572 Edition 2 und ECMA 143 3^{rd} Edition. Im Standard sind die Basisfunktionen der Signalisierung definiert. Zusätzliche Funktionen (im internationalen Sprachgebrauch: Supplementary Services) nutzen zu ihrer Steuerung das standardisierte ROSE (Remote Operation Service Elements)-Konzept. Das ROSE-Konzept definiert also die Umgebung, um zusätzliche Funktionen zu realisieren. Das ROSE-Konzept findet Anwendung bei standardisierten Supplementary Services, es wird aber auch zur Steuerung herstellerspezifischer Supplementary Services eingesetzt. Im Allgemeinen definiert ROSE fünf Aktionen:
RO-Invoke: eine Operation wird durch diese Aktion aufgerufen, d. h. die Operation wird bei der Partnerinstanz, also der gerufenen Telekommunikationsanlage, ausgelöst.
RO-Result: hier wird das positive Ergebnis einer Operation gemeldet, d. h. der Aufruf der Operation ist erfolgreich.
RO-Error: diese Aktion meldet ein negatives Ergebnis einer Operation, d. h. die Operation wurde nicht ausgeführt.
RO-Reject-U: diese Aktion wird durchgeführt, wenn eine Anforderung im Fehlerfall durch den Benutzer des Dienstes abgewiesen wird.
RO-Reject-P: hier wird eine Anforderung im Fehlerfall durch den Erbringer des Dienstes abgewiesen.

Diese ROSE-Aktionen werden auf vier Protokollelemente abgebildet. Solche Protokollelemente werden im englischen als Application Protocol Data Unit (APDU) bezeichnet. Die vier Protokollelemente sind: RO-Invoke, RO-Return-Result, RO-Return-Error, RO-Reject.

Die ROSE Protokollelemente werden mittels des FACILITY-Information-Element übertragen. Das FACILITY-Information-Element wird entweder mit Basismeldungen (Meldungen, die einen Verbindungsaufbau und Verbindungsabbau steuern), wie SETUP, ALERT, CONNECT, PROGRESS oder DISCONNECT übertragen oder, falls keine Basismeldungen zur Verfügung stehen, mit der dann zu verwendenden Meldung FACILITY. Mehrere ROSE Protokollelemente können in einem FACILITY-Informationselement enthalten sein.

Einzelwahl bedeutet, dass die einzelnen Ziffern einer Telefonnummer einzeln nacheinander eingegeben werden, wie es beim herkömmlichen Wählen einer Telefonnummer üblich ist. Blockwahl bedeutet, dass alle Wahlziffern, die zum Erreichen des Zielgeräts erforderlich sind, bereits in der SETUP-Meldung enthalten sind. Beispielsweise geschieht dies, wenn eine abgespeicherte Nummer von einem ersten Telekommunikationsendgerät abgerufen wird, um ein zweites Telekommunikationsendgerät zu rufen.

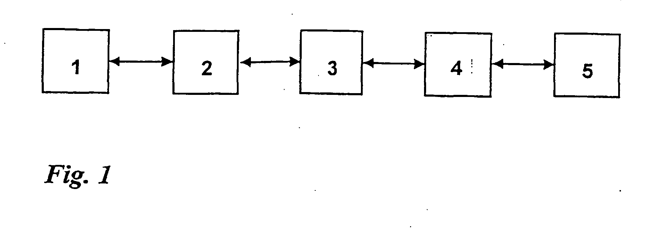

Figur 1 beschreibt einen Netzaufbau als Blockschaltbild, über den das erfindungsgemäße Verfahren zur Zugangsprüfung anwendbar ist. Ein Telekommunikationsendgerät 1 ist mit einer Ursprungsanlage 2 verbunden. Die Ursprungsanlage 2 ist weiterhin mit einer Transitanlage 3 verbunden. Die Transitanlage 3 ist weiterhin mit einer Zielanlage 4 verbunden. Die Zielanlage 4 ist weiterhin mit einem Telekommunikationsendgerät 5 verbunden. Alle in Figur 1 dargestellten Telekommunikationsendgeräte bzw. Telekommunikationsanlagen sind Elemente eines privaten Telekommunikationsnetzes, wobei auf den Leitungen zwischen den Netzknoten das PSS1/QSIG-Signalisierungsverfahren verwendet wird. Andere Konfigurationen sind hier denkbar, wobei Teile des Verbindungswegen über das öffentliche Telekommunikationsnetz geführt werden können. Hier ist beispielhaft eine Transitanlage 3 dargestellt, es können jedoch mehrere Transitanlagen beim Verbindungsaufbau verwendet werden. Das Telekommunikationsendgerät 1 ist im folgenden das rufende Telekommunikationsendgerät, während das Telekommunikationsendgerät 5 das gerufene Telekommunikationsendgerät ist. Telekommunikationsendgeräte sind bekanntermaßen Telefone, Rechner, Vermittlungsplätze oder Faxgeräte.

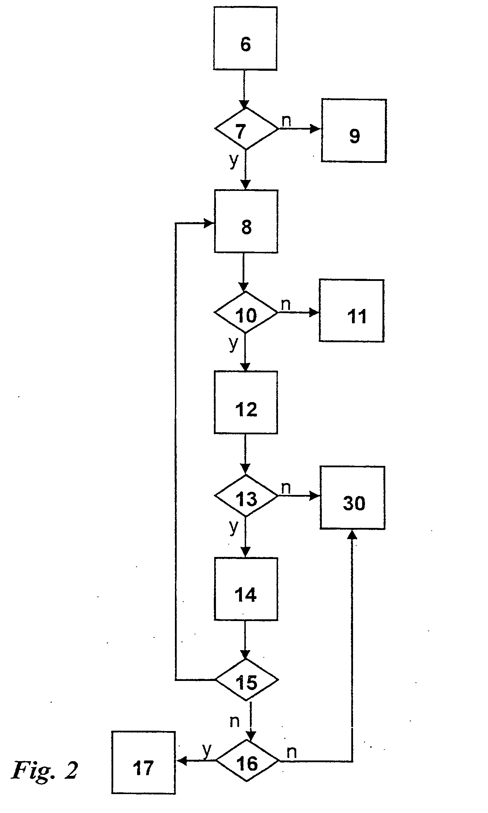

In Figur 2 ist als Flußdiagramm das erfindungsgemäße Verfahren zur Zugangsprüfung bei Einwahl über eine PSSl/QSIG-Leitung in eine Telekommunikationsanlage dargestellt. Zu den möglichen Reaktionen bei fehlgeschlagener Identifizierung gehören entweder das Auslösen der Verbindung oder der Abwurf zu einem speziellen Telekommunikationsendgerät, also die Weiterleitung zu einem speziellen Telekommunikationsendgerät, das Mittel aufweist, um beispielsweise den rufenden Teilnehmer zu identifizieren (ggf. durch ausgewähltes Personal), oder es wird ein Protokoll ausgegeben, oder die Verbindung wird fortgesetzt, wobei die Verbindungsdaten mitprotokolliert und ausgegeben werden. Diese Reaktionsmöglichkeiten werden durch den Betreiber des privaten Telekommunikationsnetzes nach PSS1/QSIG ausgewählt. Im folgenden wird hierfür die Formulierung "konfiguriertes Regelverhalten bei fehlgeschlagener Identifizierung" verwendet.

In Verfahrensschritt 6 wird eine Verbindung mit Nutzkanalbelegung (B-Kanal) zwischen dem Telekommunikationsendgerät 1 und dem Telekommunikationsendgerät 5 durch die Ursprungsanlage 2, die Transitanlage 3 und die Zielanlage 4 aufgebaut. Der Verbindungsaufbau geht von dem Telekommunikationsendgerät 1 aus, wobei entweder Einzel- oder Blockwahl verwendet wird. Die Ursprungsanlage 2 schickt daher die Meldung SETUP zur Transitanlage 3, um den Verbindungsaufbau zu beginnen. Die Transitanlage 3 quittiert den Empfang der Meldung SETUP entsprechend den allgemeinen Regeln des PSS1/QSIG-Basic Calls (d.h. i.d.R. Verschicken einer der Meldung SETUP_ACK oder CALL_PROCEEDING zur Ursprungsanlage). Da in dem hier beschriebenen Fall die bereits in der Meldung SEUTP enthaltene Wahlinformation ausreichend ist, um die Zielanlage 4 zu erreichen, schickt die Transitanlage 3 ebenfalls eine Meldung SETUP zur Zielanlage 4.

In Verfahrensschritt 7 bearbeitet die Zielanlage 4 die empfangene Meldung SETUP. Sie überprüft, ob sie den Verbindungsaufbau durchführen kann. Ist das nicht der Fall, dann wird in Verfahrensschritt 9 das erfindungsgemäße Verfahren und der Verbindungsaufbau abgebrochen. Ist das jedoch der Fall, dann wird in Verfahrensschritt 8 von der Zielanlage 4 zu der Ursprungsanlage 2 eine Identifizierungsanfrage gestartet und zwar mittels der Meldung PROGRESS. Diese Meldung PROGRESS beinhaltet zusätzlich zu den von PSS1/QSIG vorgeschriebenen Informationselementen das Informationselement Facility, welches Träger der neuen Invoke-APDU zum Start der Zugangsprüfung ist, wobei im Argument der Invoke APDU entsprechende Daten enthalten sind, die einer berechtigten Telekommunikationsanlage mitteilen, welche Identifizierung auf diese Identifizierungsanfrage zu versenden ist. Gleichzeitig wird ein Timer von der Zielanlage gestartet, der überwacht, dass die Ursprungsanlage 2 innerhalb einer vorgegebenen Zeit antwortet, ansonsten verfährt die prüfende Anlage entsprechend dem konfigurierten Regelverhalten bei fehlgeschlagener Identifizierung. Die Transitanlage 3 überträgt die Meldung PROGRESS und alle darin enthaltenen Informationselemente, darunter auch das Facility-Informationselement mit der Aufforderung zur Identifizierung, zur Ursprungsanlage 2.

In Verfahrensschritt 10 wird überprüft, ob die Ursprungsanlage 2 die Identifizierung unterstützt oder nicht. Ist die Zugangsprüfung nicht implementiert, dann wird in Verfahrensschritt 11 von der Ursprungsanlage 2 eine Reject-APDU in einem Facility-Informationselement innerhalb einer FACILITY-Meldung zu der Zielanlage 4 übertragen. Ist das Verfahren Zugangsprüfung zwar implementiert, die Ursprungsanlage 2 jedoch nicht in der Lage die speziellen Daten zu liefern, dann wird in Verfahrensschritt 11 eine ReturnError-APDU in einem Facility-Informationselement innerhalb einer FACILITY-Meldung an die Zielanlage 4 übertragen.

Hierbei können folgende Fehlercodes verwendet werden: not subscribed (die Funktion Zugangsprüfung ist nicht freigeschaltet), not available (die angeforderten Schlüsseldaten sind in der Ursprungsanlage nicht verfügbar) und unspecified (alle anderen Fehler). Den Empfang einer der APDUen ReturnError oder Reject wertet die Zielanlage 4 dann als Fehlschlag der Zugangsprüfung und das konfigurierte Regelverhalten bei fehlgeschlagener Identifizierung wird eingesetzt. Die Übertragung des Informationselements Facility mit einer der APDUen ReturnError oder Reject innerhalb der Meldung FACILITY erfolgt transparent durch die Transitanlage 3.

Wurde in Verfahrensschritt 10 jedoch von der Ursprungsanlage 2 das erfindungsgemäße Verfahren unterstützt, dann wird in Verfahrensschritt 12 mittels einer ReturnResult-APDU in einem Informationselement Facility innerhalb der Meldung FACILITY auf die Identifizierung mit den entsprechenden Identifizierungsdaten geantwortet. Die Übertragung des Informationselements Facility mit der ReturnResult APDU innerhalb der Meldung FACILITY erfolgt transparent durch die Transitanlage 3. In Verfahrensschritt 13 wird der Timer beendet und überprüft, ob die Identifizierungsdaten richtig sind oder nicht. Sind die Identifizierungsdaten falsch, dann wird in Verfahrensschritt 30 das konfigurierte Regelverhalten bei fehlgeschlagener Identifizierung verwendet.

Wurde in Verfahrensschritt 13 jedoch festgestellt, dass die Identifizierungsdaten richtig sind, dann wird in Verfahrensschritt 14 der Verbindungsaufbau fortgesetzt. In Verfahrensschritt 15 wird überprüft, ob die nächste Telekommunikationsanlage ebenfalls eine Identifizierung durchführen möchte. Dies wäre beispielsweise der Fall, wenn zunächst die Transitanlage 3, die hier keine Identifizierung durchführt, zunächst die Identifizierung von der Ursprungsanlage 2 angefragt hätte und dass dann auch die Zielanlage 4 eine weitere Identifizierungsanfrage startet. Ist das der Fall, dann wird in Verfahrensschritt 8 mit der nächsten Identifizierungsanfrage fortgesetzt. Ist das jedoch nicht der Fall, dann wird in Verfahrensschritt 16 überprüft, ob das Telekommunikationsendgerät für die prüfende Telekommunikationsanlage erreichbar ist oder nicht. Ist das der Fall, dann wird in Verfahrensschritt 17 die Verbindung zum Telekommunikationsendgerät 5 hergestellt. Ist jedoch das gerufene Telekommunikationsendgerät 5 für die prüfende Telekommunikationsanlage nicht erreichbar, dann wird in Verfahrensschritt 30 der Verbindungsaufbau abgebrochen.

Ist die Verbindung vom Telekommunikationsendgerät 1 zu dem Telekommunikationsendgerät 5 hergestellt, dann wird die Verbindung mittels Basic Call-Meldungen weitergeführt.

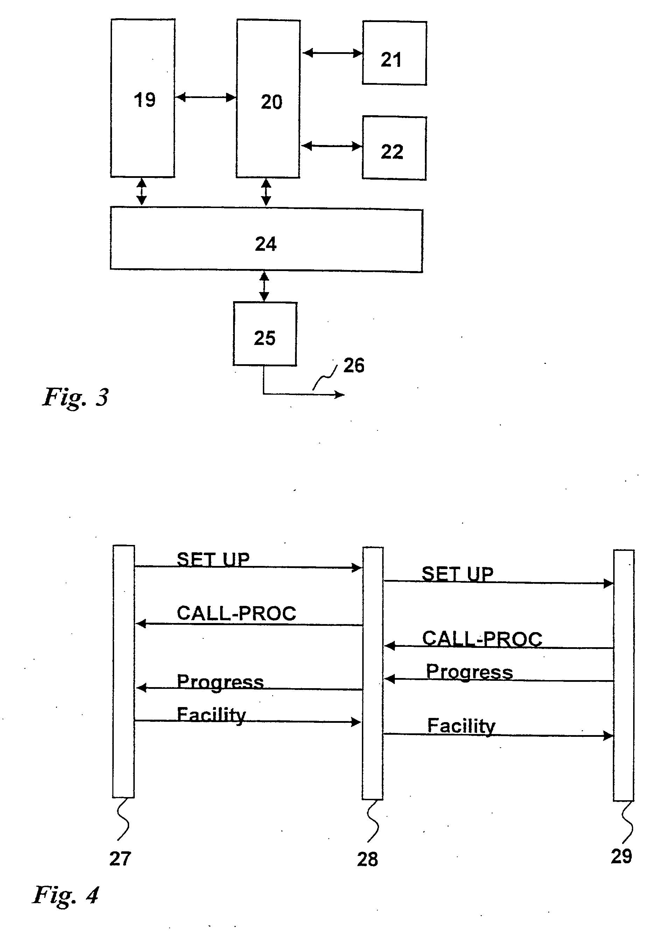

In Figur 3 ist das PSS1/QSIG-Protokollmodell als Blockschaltbild mit dem neuen Merkmal Zugangsprüfung 21 dargestellt. Die erfindungsgemäße Zugangsprüfung (SS[Supplementary Service]-Control für Zugangsprüfung) 22 ist mit einem Koordinationsprozess (Coordination Function) 20 verbunden, über den die Zugangsprüfung 22 die Dienste von ROSE 23 nutzt. Die Koordinationsfunktion 20 ist weiterhin mit der GFT (Generic Functional Transport Control)-Kontrolle 24 verbunden.

Die GFT-Kontrolle 24 zeigt zwei Arten von Diensten. Zum einen die Transportdienstleistung für Protokollelemente zwischen Funktionen, die auf verschiedenen Telekommunikationsanlagen ablaufen, und zum anderen den Aufbau und den Abbau von Verbindungen ohne Nutzkanalbelegung, das sind Signalisierungsverbindungen. Die GFT-Kontrolle 24 ist mit einer Protokollkontrolle (Protocol Control) 25 verbunden, die die Übertragung von Protokollelementen zwischen benachbarten Telekommunikationsanlagen leistet und den Aufbau und Abbau von Signalisierungsverbindungen zwischen benachbarten Telekommunikationsanlagen. Auch die Rufkontrolle (Call Control) 19 ist mit der Koordinationsfunktion 20 und der Protokollkontrolle 25 verbunden. Die Protokollkontrolle 25 übergibt beziehungsweise empfängt Daten. Der Signalisierungsmechanismus 26 gibt dann die Meldungen auf die Leitung 27 oder empfängt sie von der Leitung 27.

In Figur 4 ist der Meldungsablauf bei Blockwahl mit B-Kanal-Belegung dargestellt. Als vertikale Balken sind hier eine Ursprungsanlage 27, eine Transitanlage 28 und eine Zielanlage 29 jeweils dargestellt. Prüfende Anlage ist die Zielanlage 29. Zwischen diesen Telekommunikationsanlagen werden Meldungen ausgetauscht, um die Zugangsprüfung durchzuführen. Zunächst startet die Ursprungsanlage 27 mittels der Meldung SETUP den Verbindungsaufbau. Die Transitanlage 28 empfängt die Meldung SETUP und quittiert diese mit der Meldung CALL PROCEEDING. Danach schickt die Transitanlage 28 ihrerseits eine Meldung SETUP zur Zielanlage 29. Die Zielanlage 29 antwortet darauf mit der Meldung CALL PROCEEDING, so dass der Verbindungsaufbau fortgesetzt wird. Gleichzeitig startet die Zielanlage 29 einen Überwachungstimer mit einer vorgegebenen Überwachungszeit, um festzustellen, ob die Ursprungsanlage 27 innerhalb einer vorgegebenen Zeit antwortet, so dass ein Überschreiten dieser Überwachungszeit als Indikator für eine fehlgeschlagene Identifizierung dienen kann und zum Beispiel die Verbindung ausgelöst wird.

Dann sendet die Zielanlage 29 der Ursprungsanlage 27 mittels der Meldung PROGRESS eine Aufforderung zur Identifizierung. Diese Meldung PROGRESS beinhaltet zusätzlich zu den vom PSS1/QSIG vorgeschriebenen Informationselementen das Informationselement Facility, welches Träger der neuen Invoke-APDU ist, wobei im Argument der Invoke APDU entsprechende Daten enthalten sind, die einer berechtigten Telekommunikationsanlage mitteilen, welche Identifizierung auf diese Identifizierungsanfrage zu versenden ist. Hier ist die Ursprungsanlage 27 berechtigt, so dass dann die Ursprungsanlage 27 mittels der Meldung FACILITY mit der korrekten Identifizierung in einer ReturnResult APDU, und zwar im Informationselement Facility, auf die Identifizierungsanfrage antwortet.

Die Transitanlage 28 überträgt diese Meldung FACILITY ohne Änderung an ihren Inhalten an die Zielanlage 29. Die Zielanlage 29 empfängt diese Meldung FACILITY mit den korrekten Identifizierungsdaten und stellt fest, dass die Zugangsprüfung erfolgreich ist. Damit kann der Überwachungstimer beendet werden. Nun wird der Verbindungsaufbau fortgesetzt und zwar mit Standardmeldungen aus dem Basic Call.

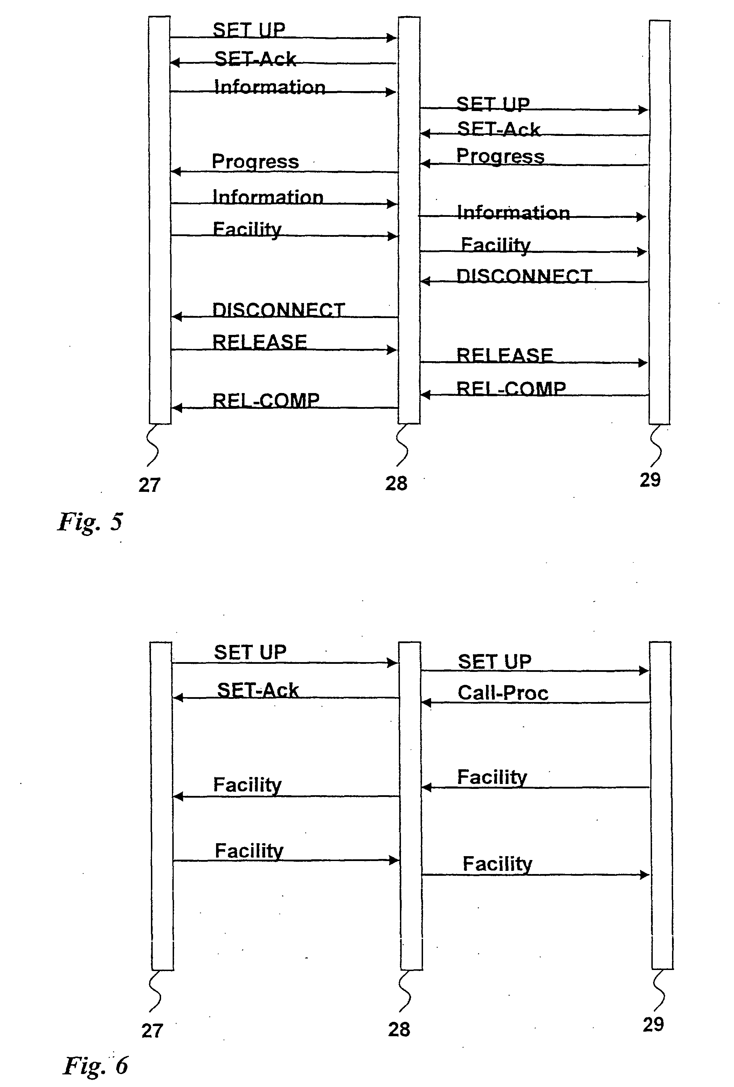

In Fig. 5 ist der Meldungsablauf bei Einzelwahl und B-Kanal-Nutzung dargestellt. Die Ursprungsanlage 27 startet den Verbindungsaufbau mit der Meldung SETUP. Daraufhin schickt die Transitanlage 28 die Quittungsmeldung SETUP_ACKNOWLEDGE, woraufhin die Ursprungsanlage 27 der Transitanlage 28 vom Teilnehmer gegebenenfalls bereits weitergewählte Ziffern in einer Meldung INFORMATION oder gegebenenfalls in mehreren Meldungen INFORMATION überträgt. Sobald die Wahlinformation für die weitere Vermittlung ausreicht, wird von der Transitanlage 28 die Meldung SETUP an die Zielanlage 29 übertragen, die dies mit der Meldung SETUP_ACKNOWLEDGE quittiert. Die Zielanlage 29 ist die prüfende Anlage. Daraufhin startet die Zielanlage 29 den Überwachungstimer. Dann sendet die Zielanlage 29 die Meldung PROGRESS mit der Aufforderung zur Identifizierung. Diese Meldung PROGRESS beinhaltet zusätzlich zu den vom PSS1/QSIG vorgeschriebenen Informationselementen das Informationselement Facility, welches Träger der neuen Invoke-APDU zum Start der Zugangsprüfung ist, wobei im Argument der Invoke APDU entsprechende Daten enthalten sind, die einer berechtigten Telekommunikationsanlage mitteilen, welche Identifizierung auf diese Identifizierungsanfrage zu versenden ist.

Die Transitanlage 28 überträgt die Meldung PROGRESS weiter zur Ursprungsanlage 27 ohne Änderungen an den Inhalten des Favility-Informationselements. Die Wahl läuft unabhängig zur Zugangsprüfung weiter, bis alle Wahlziffern übertragen wurden (INFORMATION-Meldungen von der Ursprungsanlage zur prüfenden Anlage). Die Wahlinformationen werden in der prüfenden Anlage bis zum Abschluß der Zugangsprüfung gespeichert und erst nach erfolgreicher Identifizierung bearbeitet. Dann sendet die Ursprungsanlage 27 mittels der Meldung FACILITY Identifizierungsdaten in einer ReturnResult APDU innerhalb des Informationselements Facility, die hier jedoch falsch sind. Die Transitanlage 28 überträgt die Meldung FACILITY weiter zur Zielanlage 29 ohne Änderungen an den Inhalten des Facility-Informationselements. Da die Ursprungsanlage 27 geantwortet hat, beendet die Zielanlage 29 den Überwachtungstimer, stellt aber fest, dass die Zugangsprüfung fehlschlägt. Hier ist als Reaktion auf einen Fehlschlag der Identifizierung das Auslösen der Verbindung eingestellt. Dafür sendet die Zielanlage 29 die Meldung DISCONNECT zur Transitanlage 28, die ihrerseits eine Meldung DISCONNECT zur Ursprungsanlage 27 schickt

Die Transitanlage 28 antwortet zur Zielanlage 29 mit der Meldung RELEASE welche die Zielanlage 29 mit der Meldung RELEASE_COMPLETE beantwortet. Damit ist die Verbindung zwischen Zielanlage 29 und Transitanlage 28 ausgelöst. Die Ursprungsanlage 27 beantwortet die Meldung DISCONNECT mit der Meldung RELEASE und erhält als Quittung von der Transitanlage 28 die Meldung RELEASE_COMPLETE. Damit sind alle betroffenen PSS1/QSIG-Verbindungen ausgelöst.

In Figur 6 ist der Meldungsablauf einer D-Kanal-Verbindung dargestellt. Die Ursprungsanlage 27 startet den Verbindungsaufbau mit der Meldung SETUP. Daraufhin schickt die Transitanlage 28 die Quittungsmeldung CALL_PROCEEDING zur Ursprungsanlage 27 und die Meldung SETUP zur Zielanlage 29. Die Zielanlage 29 antwortet darauf mit der Meldung CALL_PROCEEDING, da hier die Wahlinformation bereits mit der Meldung SETUP vollständig übertragen wurde. Bei D-Kanalverbindungen wird grundsätzlich die Blockwahl verwendet. Die Zielanlage 29 startet gleichzeitig den Überwachungstimer, um festzustellen, ob die Ursprungsanlage 27 innerhalb einer vorgegebenen Zeit antwortet. Dann sendet die Zielanlage 29 weiterhin die Identifizierungsanfrage mit der Meldung FACILITY. Diese Meldung FACILITY beinhaltet das Informationselement Facility, welches Träger der neuen Invoke-APDU zum Start der Zugangsprüfung ist, wobei im Argument der Invoke APDU entsprechende Daten enthalten sind, die einer berechtigten Telekommunikationsanlage mitteilen, welche Identifizierung auf diese Identifizierungsanfrage zu versenden ist. Die Transitanlage 28 überträgt die Meldung FACILITY weiter zur Ursprungsanlage 27 ohne Änderungen an den Inhalten des Facility-Informationselements.

Die Ursprungsanlage 27 antwortet daraufhin ebenfalls mit der Meldung FACILITY und der korrekten Identifizierung in einer ReturnResult APDU innerhalb des Informationselements. Die Transitanlage 28 überträgt die Meldung FACILITY weiter zur Zielanlage 29 ohne Änderungen an den Inhalten des Facility-Informationselements. Nach Empfang dieser Meldung FACILITY von der Ursprungsanlage 27 durch die Zielanlage 29 beendet die Zielanlage 29 den Überwachungstimer und stellt fest, dass die Zugangsprüfung erfolgreich ist. Die Fortsetzung der Verbindung wird mit Standard-Basic-Call-Meldungen durchgeführt.

Tabelle 1 beschreibt formal die Inhalte der Zugangsprüfung in der QSIG üblichen Form. Mit dieser formalen Beschreibung in ASN.1 ist über die Codierregeln (Basic Encoding Rules) unmittelbar das Binärmuster festgelegt. Die formale Definition legt jedoch nicht nur den Inhalt der Signalisierung fest, sondern auch einen sogenannten Identifier, der diese Signalisierungsinformation innerhalb von QSIG eindeutig kennzeichnet. Der Identifier findet sich in der letzten Zeile wieder:
accessctrl AccessCtrl ::={boschqsigext access-ctrl (120)}.

Alle Zeilen, die mit Import beginnnen, bedeuten, dass Definitionen aus dem QSIG-Standard übernommen werden. Die Zeile. Die Zeile, die mit Boschqsigext beginnt, bedeutet, dass der firmenspezifische Object-Identifier für QSIG-Anwendungen der firmenspezifischen Telekommunikationsanlage festgelegt wird. Die Zeilen, die mit AccessCtrl OPERATION beginnen und vor der Zeile beginnend mit Key SEQUENCE enden, definieren die neue ROSE-Operation für die Zugangsprüfung.

Wobei die Zeile ARGUMENT {key Key} die Struktur der Daten der Zugangsprüfungsanforderung beschreibt; die Zeile RESULT {key Key} die Struktur der Identifizierungsdaten beschreibt, welche als Antwort auf die Anforderung geschickt werden und die Zeile ERRORS {notSubscribed, notAvailable, unspecified} Fehlercodes festlegt, die eine Ursprungsanlage schicken kann, falls sie keine Identifizierungsdaten schicken kann (notSubscribed: Merkmal Zugangsprüfung ist nicht freigeschaltet, notAvailable: keine Identifizierungsdaten für diesen Schlüssel vorhanden, unspecified: alle anderen Fehler). Die Zeilen:
- Key: SEQUENCE
{identifier OPERATION data ANY DEFINED BY identifier}
beschreiben die Struktur des Schlüsseldaten selbst. Sie sind eine Folge (SEQUENCE) aus einer eindeutigen Kennung {identifier}, d.h. welches Schlüsselverfahren verwendet wird und zusätzlichen Schlüsseldaten (data), deren Struktur nicht fest vorgegeben ist, sondern individuell erst durch den identifier festgelegt wird (ANY DEFINED BY identifier). Da der identifier vom Typ OPERATION ist, kann jeder Betreiber eines privaten Telekommunikationsnetzes eigenständig eindeutige identifier vergeben, die Struktur und Inhalt seiner Schlüsseldaten festlegen. Hierin liegt die Flexibilität bei der Verwendung von Schlüsselverfahren begründet und auch die Möglichkeit, mehrere Schlüsselverfahren in einem Netz zu fahren.

Träger der Information ist das Informationselement FACILITY. Das FACILITY-Informationselement wird mit der folgenden Kodierung für die Network-FACILITY-Extension verschickt.
- Source-entity:: EndPINX
- DestinationEntity:: EndPINX

Das FACILITY-Informationselement wird mit der folgenden Kodierung für die Interpretations-APDU verschickt: rej ectAnyUnrecognizedAPDU

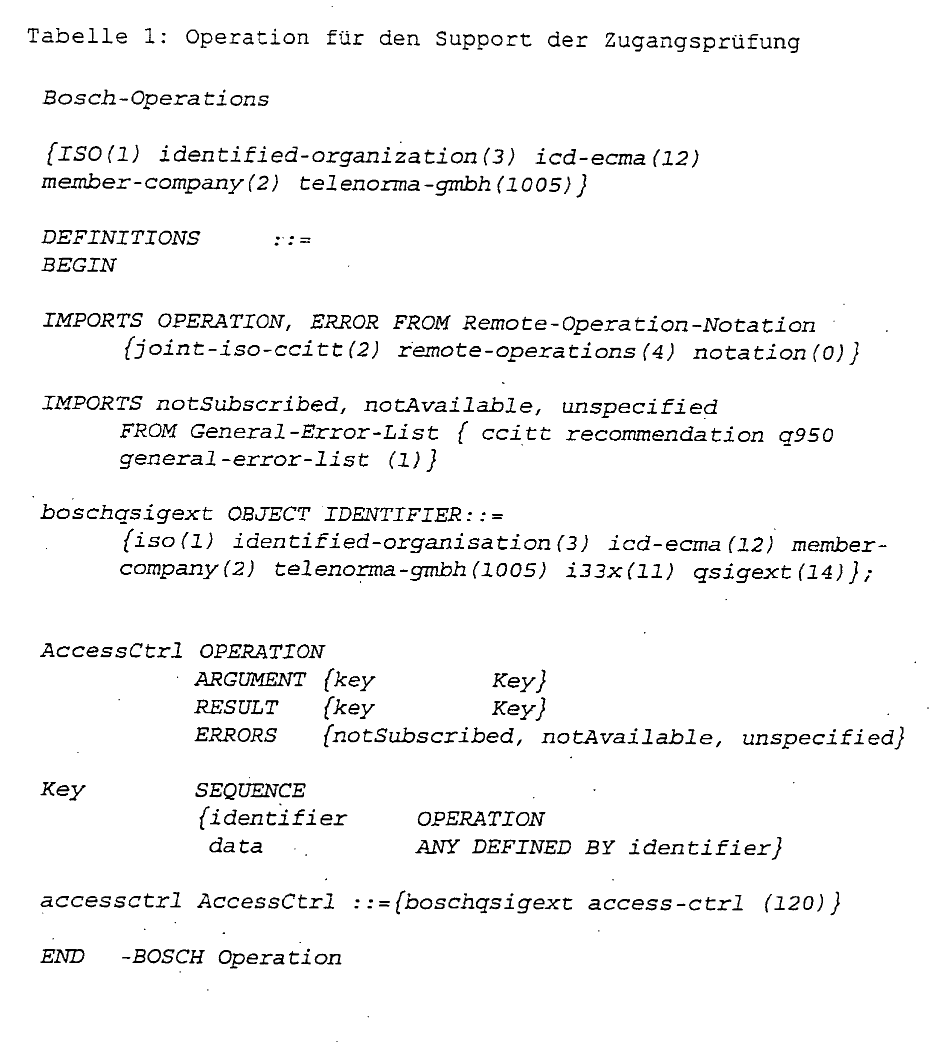

## Patentansprüche

1. Verfahren zur Einwahl über eine PSS1/QSIG-Leitung in eine Telekommunikationsanlage,
bei der zwischen zwei Telekommunikationsendgeräten (1, 5) eine Verbindung aufgebaut wird, die mittels der PSS1/QSIG-Leitung über eine rufende und eine prüfende Telekommunikationsanlage (2, 4) verläuft, wobei die Telekommunikationsanlagen (2, 4) Teile eines privaten Telekommunikationsnetzes sind,
**dadurch gekennzeichnet, dass**
die prüfende Telekommunikationsanlage (4) zur Ausführung einer Zugangsprüfung sowohl für Verbindungen mit als auch ohne Nutzkanalbelegung über die PSS1/QSIG-Leitung eine Aufforderung zur Identifizierung an die rufende Telekommunikationsanlage (2) sendet, wobei die Aufforderung als Teil einer Nachricht, die den Verbindungsaufbau zwischen den Telekommunikationsendgeräten (1, 5) betrifft, gesendet wird, und
die rufende Telekommunikationsanlage (2) als Reaktion auf die Aufforderung gegebenenfalls eine Identifizierung an die prüfende Telekommunikationsanlage (4) sendet.

2. Verfahren nach Anspruch 1, **dadurch gekennzeichnet, dass** die prüfende Telekommunikationsanlage (4) entweder eine Transitanlage oder eine Zielanlage ist.

3. Verfahren nach Anspruch 1 oder 2, **dadurch gekennzeichnet, dass** bei einer richtigen Identifizierung die Verbindung fortgesetzt wird.

4. Verfahren nach Anspruch 2, **dadurch gekennzeichnet, dass** bei einer falschen oder fehlenden Identifizierung die prüfende Telekommunikationsanlage (4) die Verbindung auslöst oder die Verbindung zu einem vorgegebenen Telekommunikationsendgerät weiterleitet oder ein Protokoll ausgibt oder die Verbindung fortsetzt, wobei Verbindunosdaten gespeichert und ausgegeben werden.

5. Verfahren nach einem der vorhergehenden Ansprüche,
**dadurch gekennzeichnet, dass** die Verbindung mittels der Meldung SETUP von der rufenden Telekommunikationsanlage aufgebaut wird.

6. Verfahren nach Anspruch 5, **dadurch gekennzeichnet, dass** die prüfende Telekommunikationsanlage (4) die Aufforderung zur Identifizierung mittels der Meldungen PROGRESS oder FACILITY versendet.

7. Verfahren nach Anspruch 6, **dadurch gekennzeichnet, dass** eine richtige Identifikation mit der Meldung FACILITY übertragen wird.

8. Verfahren nach einem der vorhergehenden Ansprüche,
**dadurch gekennzeichnet, dass** das rufende
Telekommunikationsendgerät und das gerufene
Telekommunikationsendgerät (5) beide unmittelbar an eine
Telekommunikationsanlage des privaten
Telekommunikationsnetzes angeschlossen sind oder rufendes und gerufenes Telekommunikationsendgerät über das öffentliche Telekommunikationsnetz an die Telekommunikationsanlagen des privaten Telekommunikationsnetzes angeschlossen sind oder eines von beiden unmittelbar an eine Telekommunikationsanlage des privaten Telekommunikationsnetzes angeschlossen ist und dass andere über das öffentliche Telekommunikationsnetz an eine Telekommunikationsanlage des privaten Telekommunikationsnetzes angeschlossen ist, wobei an den Schnittstellen zwischen PSS1/QSIG und dem öffentlichen Telekommunikationsnetz Gateways eingesetzt werden.

9. Verfahren nach einem der vorhergehenden Ansprüche,
**dadurch gekennzeichnet, dass** die Aufforderung zur
Identifizierung aufeinanderfolgend von mehreren
Telekommunikationsanlagen im PSS1/QSIG-Netz durchgeführt wird.

10. Verfahren nach einem der vorhergehenden Ansprüche,
**dadurch gekennzeichnet, dass** bei dem Verfahren Block- und Einzelwahl unterstützt werden, wobei bei Einzelwahl die Zugangsprüfung während des Wahlvorgangs durchgeführt wird, wobei bei erfolgreicher Identifizierung weiter vermittelt wird.

11. Verfahren nach einem der Ansprüche 5 bis 10, **dadurch gekennzeichnet, dass** das Verfahren der prüfenden Telekommunikationsanlage (4) Verwendung der Meldung PROGRESS gestattet, Töne oder Ansagen während der Zugangsprüfung zu schalten.

12. Verfahren nach einem der vorhergehenden Ansprüche,
**dadurch gekennzeichnet, dass** das Verfahren durch Verwendung der Interpretations-APDU "Reject Any Unrecognized APDU" erzwingt, dass eine gerufene Telekommunikationsanlage, die das Verfahren nicht unterstützt, eine Reject APDU zur prüfenden Telekommunikationsanlage (4) schickt, was diese als Fehlschlag der Zugangsprüfung wertet.

13. Verfahren nach einem der vorhergehenden Ansprüche,
**dadurch gekennzeichnet, dass** bei diesem Verfahren Schlüsseldaten, die zur Prüfung genutzt werden, beliebig gewählt werden.

14. Verfahren nach Anspruch 13, **dadurch gekennzeichnet, dass** gleichzeitig mehrere Schlüsseldaten und -verfahren verwendet werden.

15. Verfahren nach einem der vorhergehenden Ansprüche,
**dadurch gekennzeichnet, dass** die rufende
Telekommunikationsanlage vorgegebene Fehlercodes an die prüfende Telekommunikationsanlage sendet, falls die rufende Telekommunikationsanlage die Identifizierung nicht liefern kann.

16. Verfahren nach Anspruch 18, **dadurch gekennzeichnet, dass** als die vorgegebenen Fehlercodes nonSubscribed, notAvailable und unspecified verwendet werden.

17. Telekommunikationsanlage (4) zur Durchführung des Verfahrens nach einem der vorhergehenden Ansprüche,
**dadurch gekennzeichnet, dass**
die Anlage (4) zur Ausführung einer Zugangsprüfung sowohl für Verbindungen mit als auch ohne Nutzkanalbelegung über die PSS1/QSiQ-Leitung ausgebildet ist, um in Reaktion auf eine empfangene Verbindungsaufbaunachricht von einer rufenden Telekommunikationsanlage (2) eine Aufforderung zur Identifizierung an die rufende Telekommunikationsanlage (2) zu senden, wobei die Aufforderung als Teil einer Nachricht, die den Verbindungsaufbau betrifft, gesendet wird.

18. Telekommunikationsanlage (2) zur Durchführung des Verfahrens nach einem der vorhergehenden Ansprüche,
**dadurch gekennzeichnet, dass**
die Anlage (2) zur Ausführung einer Zugangsprüfung sowohl für Verbindungen mit als auch ohne Nutzkanalbelegung über die PSS1/QSiQ-Leitung ausgebildet ist, um in Reaktion auf eine empfangene Aufforderung zur Identifizierung eine solche Identifizierung an diejenige Telekommunikationsanlage (4) zu senden, von der die Aufforderung empfangen wurde.

## Claims

1. Method for dialing into a telecommunication system via a PSS1/QSIG link in which a connection is established between two telecommunication terminals (1, 5) via said PSS1/QSIG link through a calling and a checking telecommunication system (2, 4), whereby the telecommunication systems (2, 4) are part of a private telecommunication network,
**characterized in that**
the checking telecommunication system (4) for conducting an access check on connections both with and without bearer channel allocation via the PSS1/QSIG link sends a request for identification to the calling telecommunication system (2), whereby the request is sent as part of a message related to establishing the connection between said telecommunication terminals (1, 5), and the calling telecommunication system (2) sends an identification as applicable to the checking telecommunication system (4) in response to the request.

2. Method according to claim 1, **characterized in that** said checking telecommunication system (4) is either a transit system or a target system.

3. Method according to claim 1 or 2, **characterized in that** the connection proceeds when a correct identification is given.

4. Method according to claim 2, **characterized in that** upon a wrong or no identification being given, the checking telecommunication system (4) releases the connection or forwards the connection to a pre-defined telecommunication terminal or issues a protocol or proceeds with the connection, whereby connection data is stored and displayed.

5. Method according to one of the preceding claims, **characterized in that** the connection is established via the SETUP message from the calling telecommunication system.

6. Method according to claim 5, **characterized in that** the checking telecommunication system (4) sends the request for identification via the PROGRESS or FACILITY message.

7. Method according to claim 6, **characterized in that** a correct identification is transmitted with the FACILITY message.

8. Method according to one of the preceding claims, **characterized in that** both the calling telecommunication terminal and the called
telecommunication terminal (5) are directly connected to a telecommunication system of the private telecommunication network, or the calling and called telecommunication terminals are connected through the public telecommunication network to the telecommunication system of the private telecommunication network, or one of the two is connected directly to a telecommunication system of the private telecommunication network and the other is connected to a telecommunication system of the private telecommunication network via the public telecommunication network, whereby gateways are disposed at the interfaces between the PSS1/QSIG and the public telecommunication network.

9. Method according to one of the preceding claims, **characterized in that** the request for identification is performed consecutively by a plurality of telecommunication systems in the PSS1/QSIG network.

10. Method according to one of the preceding claims, **characterized in that** the method supports block and single dialing, whereby in the case of single dialing, the access check is conducted during the dialing process, whereby the connection proceeds upon successful identification.

11. Method according to one of claims 5 through 10, **characterized in that** the method of the checking telecommunication system (4) permits the use of the PROGRESS message to switch to audio or hold during the access check.

12. Method according to one of the preceding claims, **characterized in that** the method's use of the "Reject Any Unrecognized APDU" Interpretation APDU forces a called telecommunication system which does not support the method to send a Reject APDU to the checking telecommunication system (4), which assesses same as failure of the access check.

13. Method according to one of the preceding claims, **characterized in that** the method allows an arbitrary selection of the coded data to be used for the check.

14. Method according to claim 13, **characterized in that** a plurality of cryptographic data and procedures can be used simultaneously.

15. Method according to one of the preceding claims, **characterized in that** the calling telecommunication system sends pre-defined error codes to the checking telecommunication system if the calling telecommunication system cannot provide identification.

16. Method according to claim 15, **characterized in that** nonSuscribed, notAvailable and unspecified are used as the pre-defined error codes.

17. Telecommunication system (4) for implementing the method according to one of the preceding claims,
**characterized in that**
the system (4) for conducting an access check on connections both with and without bearer channel allocation via the PSS1/QSIG link is designed to send a request for identification to a calling telecommunication system (2) in response to receiving a connection establishment message from said calling telecommunication system (2), whereby the request is sent as part of a message related to establishing the connection.

18. Telecommunication system (2) for implementing the method according to one of the preceding claims,
**characterized in that**
the system (2) for conducting an access check on connections both with and without bearer channel allocation via the PSS1/QSIG link is designed so as to send an identification in response to receiving a request for such identification to the telecommunication system (4) from which the request was received.

## Revendications

1. Procédé d'appel à partir d'une ligne PSS1/QSIG dans une installation de télécommunication,
dans lequel entre deux terminaux de télécommunication (1, 5) une liaison est établie qui se déroule au moyen de la ligne PSS1/QSIG par une installation de télécommunication d'appel et une installation de télécommunication de vérification (2, 4), les installations de télécommunication (2, 4) formant parties d'un réseau privé de télécommunication,
**caractérisé en ce que**
l'installation de télécommunication de vérification (4), pour l'exécution d'une vérification d'accès ainsi que pour des liaisons avec et également sans affectation de canal utile par la ligne PSS1/QSIG, envoie une demande d'identification à l'installation de télécommunication d'appel (2), la demande étant envoyée en tant que partie d'un message qui concerne l'établissement de la liaison entre les terminaux de télécommunication (1, 5), et l'installation de télécommunication d'appel (2), en tant que réaction à la demande, envoie éventuellement une identification à l'installation de télécommunication de vérification (4).

2. Procédé selon la revendication 1, **caractérisé en ce que** l'installation de télécommunication de vérification (4) est soit une installation de transit ou une installation cible.

3. Procédé selon la revendication 1 ou 2, **caractérisé en ce que**, dans le cas d'une identification correcte, la liaison est poursuivie.

4. Procédé selon la revendication 2, **caractérisé en ce que**, dans le cas d'une identification fausse ou manquante, l'installation de télécommunication de vérification (4) lance la liaison ou relaie la liaison à un terminal prédéterminé de télécommunication ou sort un protocole ou poursuit la liaison, les données de liaison étant enregistrées et sorties.

5. Procédé selon l'une quelconque des revendications précédentes, **caractérisé en ce que** la liaison est établie au moyen du message SETUP de l'installation de télécommunication d'appel.

6. Procédé selon la revendication 5, **caractérisé en ce que** l'installation de télécommunication de vérification (4) envoie la demande d'identification au moyen des messages PROGRESS ou FACILITY.

7. Procédé selon la revendication 6, **caractérisé en ce qu'**une identification correcte est transmise avec le message FACILITY.

8. Procédé selon l'une quelconque des revendications précédentes, **caractérisé en ce que** le terminal de télécommunication appelant et le terminal de télécommunication appelé (5) sont tous les deux raccordés directement à une installation de télécommunication du réseau privé de télécommunication ou le terminal de télécommunication appelant et le terminal de télécommunication appelé sont raccordés aux installations de télécommunication du réseau privé de télécommunication à travers le réseau public de télécommunication ou que l'un des deux est raccordé directement à une installation de télécommunication du réseau privé de télécommunication et l'autre, à travers le réseau public de télécommunication, à une installation de télécommunication du réseau privé de télécommunication, des passerelles étant mises en oeuvre aux interfaces entre PSS1/QSIG et le réseau public de télécommunication.

9. Procédé selon l'une quelconque des revendications précédentes, **caractérisé en ce que** la demande d'identification est réalisée à la suite par plusieurs installations de télécommunication dans le réseau PSS1/QSIG.

10. Procédé selon l'une quelconque des revendications précédentes, **caractérisé en ce que**, dans le procédé, l'appel individuel ou par bloc est supporté, la vérification d'accès étant exécutée pendant le procédé d'appel dans le cas de l'appel individuel, la transmission se poursuivant en cas d'identification réussie.

11. Procédé selon l'une quelconque des revendications 5 à 10, **caractérisé en ce que** le procédé de l'installation de télécommunication de vérification (4) autorise l'utilisation du message PROGRESS pour la commutation de tonalités ou d'annonces pendant la vérification d'accès.

12. Procédé selon l'une quelconque des revendications précédentes, **caractérisé en ce que** le procédé, par utilisation de l'APDU d'interprétation « Reject Any Unrecognized APDU », force qu'une installation de télécommunication appelée qui ne supporte pas le procédé envoie à l'installation de télécommunication de vérification (4) un « Reject APDU », ce que celle-ci considère comme un échec de la vérification d'accès.

13. Procédé selon l'une quelconque des revendications précédentes, **caractérisé en ce que**, dans ce procédé, des données clés utilisées pour la vérification peuvent être librement choisies.

14. Procédé selon la revendication 13, **caractérisé en ce que** plusieurs données et procédés clés sont utilisés simultanément.

15. Procédé selon l'une quelconque des revendications précédentes, **caractérisé en ce que** l'installation de télécommunication appelante envoie des codes d'erreur prédéfinis à l'installation de télécommunication de vérification lorsque l'installation de télécommunication appelante ne peut pas fournir l'identification.

16. Procédé selon la revendication 15, **caractérisé en ce que** nonSuscribed, notAvailable et unspecified sont utilisés en tant que codes d'erreur prédéfinis.

17. Installation de télécommunication (4) pour exécuter le procédé selon l'une quelconque des revendications précédentes,
**caractérisée en ce que**
l'installation (4) pour l'exécution d'une vérification d'accès ainsi que pour des liaisons avec et également sans affectation de canal utile par la ligne PSS1/QSIG, est constituée de façon à, en réaction à un message d'établissement de liaison reçu d'une installation de télécommunication d'appel (2), envoyer une demande d'identification à l'installation de télécommunication d'appel (2), la demande étant envoyée en tant que partie d'un message concernant l'établissement de la liaison.

18. Installation de télécommunication (2) pour exécuter le procédé selon l'une quelconque des revendications précédentes,
**caractérisée en ce que**
l'installation (2) pour l'exécution d'une vérification d'accès ainsi que pour des liaisons avec et également sans affectation de canal utile par la ligne PSS1/QSIG, est constituée de façon à, en réaction à une demande d'identification reçue, envoyer une telle identification à l'installation de télécommunication (4) dont la demande a été reçue.
